# EUROPÄISCHE PATENTANMELDUNG

(11) **EP 1 632 605 A1**
(43) Veröffentlichungstag der Anmeldung: **08.03.2006**
(21) Anmeldenummer: 04405544.0
(22) Anmeldetag: 01.09.2004
(51) Int. Cl.: E01C 11/22

(54) **Entwässerungsrinne, Rinnenkörper und deren Kombination**

(71) Anmelder: Poly-Bauelemente AG, 3315 Bätterkinden (CH)
(72) Erfinder: Lezza, Ferdinando R., 5400 Baden (CH); Brink, Heinz Dieter, 3043 Uettligen (CH)
(74) Vertreter: Clerc, Natalia

(57) **Zusammenfassung**

Es wird eine Entwässerungsrinne (1) zum Einlassen in eine Oberfläche offenbart. Um ein sicheres Abfliessen des Wassers auch im abflussfernen Bereich sicherzustellen, ist in diesem Bereich die Neigung (α) des Kanalbodens (21) gegen die Oberkante (22) gegenüber dem abflussnahen Bereich erhöht. Die Rinne ist bevorzugt aus mehreren Rinnenkörpern (20; 30; 40; 50; 60; 70) aufgebaut. Um einen einfachen Einbau der Rinne zu ermöglichen, verläuft bevorzugt der äussere Boden (23; 33; 43; 53; 63; 73) jedes Rinnenkörpers (20; 30; 40; 50; 60; 70) parallel zu seiner Oberkante (22; 32; 42; 52; 62; 72).

## Beschreibung

### Technisches Gebiet

Die vorliegende Erfindung bezieht sich auf eine Entwässerungsrinne mit den Merkmalen des Oberbegriffs von Anspruch 1, auf einen Rinnenkörper mit den Merkmalen des Oberbegriffs von Anspruch 8 oder 9, sowie auf eine Kombination solcher Rinnenkörper.

### Stand der Technik

Entwässerungsrinnen werden häufig eingesetzt, um Wasser von der Oberfläche von Parkplätzen, Strassen, Wegen, Rollbahnen auf Flughäfen, Böden in Industriehallen, Schlachthöfen oder Metzgereien usw. abzuführen. Die Rinnen werden in die Oberfläche eingelassen, sind nach oben hin offen und meist mit einem Gitter abgedeckt. In der Regel sind sie aus einer Mehrzahl von vorgefertigten Rinnenkörpern aus Beton, Polyesterbeton oder anderen Materialien aufgebaut, die an ihren Enden miteinander verbunden sind. Für den Einbau einer solchen Rinne in den Untergrund ist es erforderlich, einen Graben auszuheben, dessen Tiefe exakt auf die Einbautiefe jedes Rinnenkörpers abgestimmt ist.

Um das in die Rinne gelangende Wasser selbständig abfliessen zu lassen, ist es wünschenswert, die Entwässerungsrinne leicht in Längsrichtung geneigt einzubauen, um so ein Gefälle zu erreichen. Häufig wird jedoch die Oberfläche, in welche die Rinne eingelassen ist, selbst kein Gefälle aufweisen. Um dennoch das Abfliessen des Wassers erreichen zu können, ist es bekannt, die Entwässerungsrinne aus Rinnenkörpern aufzubauen, bei denen der Kanalboden und der dazu parallel verlaufende äussere Boden des Rinnenkörpers gegenüber der Oberkante des Rinnenkörpers leicht geneigt sind. Dadurch weist die Rinne selbst bei horizontaler Oberfläche ein Gefälle auf.

Damit die Oberkante aller Rinnenkörper bündig mit der (horizontalen) Oberfläche, in welche die Rinne eingebaut ist, abschliessen kann, muss die Höhe der Seitenwände der Rinnenkörper, und damit deren Bauhöhe, entlang der Entwässerungsrinne von Rinnenkörper zu Rinnenkörper kontinuierlich zunehmen. Eine solche Entwässerungsrinne ist zum Beispiel in der EP-A 0 206 996 offenbart. Bei einer derartigen Rinne ist es erforderlich, einen Graben auszuheben, der zum abflussseitigen Ende hin in seiner Tiefe gegenüber der Oberfläche kontinuierlich zunimmt. Dies ist mit einem verhältnismässig grossen Aufwand verbunden und erfordert exaktes Arbeiten, was unter den üblichen Bedingungen auf einer Baustelle nicht einfach zu erfüllen ist.

Bei solchen Entwässerungsrinnen ist das Gefälle häufig nicht ausreichend, um in allen Bereichen der Entwässerungsrinne ein sicheres Ablaufen des Wassers sicherzustellen. Dadurch bleiben häufig Wasser- und Schmutzreste im Kanal zurück, die zur Verschmutzung des Kanals, zu unangenehmen Gerüchen und langfristig zu Veränderungen des Kanalmaterials bis hin zu Undichtigkeiten führen können.

### Darstellung der Erfindung

Es ist daher eine Aufgabe der vorliegenden Erfindung, eine Entwässerungsrinne oder Einzelteile einer solchen Rinne anzugeben, die ein sicheres Abfliessen des Wassers ermöglichen.

Diese Aufgabe wird durch eine Entwässerungsrinne mit den Merkmalen des Anspruchs 1, einen Rinnenkörper mit den Merkmalen des Anspruchs 8 oder durch eine Kombination von Rinnenkörpern mit den Merkmalen des Anspruchs 10 gelöst.

Die erfindungsgemässe Entwässerungsrinne hat somit ein abflussseitiges und ein abflussfernes Ende. Die Rinne umfasst und begrenzt einen Kanal zur Aufnahme von Flüssigkeit, der nach oben hin zumindest teilweise offen ist. Der Kanal weist einen Kanalboden auf, über dem sich die abzuführende Flüssigkeit sammelt und über den sie abfliesst. Nach oben hin ist die Entwässerungsrinne durch eine Oberkante begrenzt. Die Oberkante verläuft in der Regel bündig mit der Oberfläche, in die die Rinne eingelassen ist, und verläuft somit vorzugsweise im wesentlichen horizontal. Erfindungsgemäss ist der Kanalboden in einem an das abflussferne Ende angrenzenden Bereich in Längsrichtung stärker gegen die Oberkante geneigt als in jedem anderen Bereich der Entwässerungsrinne. Mit anderen Worten ist das Gefälle des Kanalbodens am Anfang der Rinne gegenüber dem Gefälle am Ende der Rinne erhöht. Dadurch können auch verhältnismässig geringe Wassermengen, wie sie üblicherweise am Anfang einer Entwässerungsrinne auftreten, aufgrund des erhöhten Gefälles in diesem Bereich effizient abtransportiert werden. Dies wird selbst dann möglich sein, wenn z.B. eine gewisse Menge Schmutz in diesem Bereich das Abfliessen stört, da dieser durch das erhöhte Gefälle und den dadurch erhöhten Wasserdruck leichter mitgerissen wird. Am abflussseitigen Ende dagegen ist nur eine geringere oder gar keine Neigung erforderlich, da die hier transportierten Wassermengen in der Regel grösser sein werden. Durch den entsprechend höheren Wasserdruck werden diese auch bei geringem oder fehlendem Gefälle leicht abfliessen und allfällig vorhandenen Schmutz mit sich transportieren. Da am abflussseitigen Ende nur eine geringe oder gar keine Neigung gewählt zu werden braucht, kann bei vorgegebener Einbautiefe eine grössere Länge der Entwässerungsrinne erreicht werden.

Bevorzugt nimmt die Neigung des Kanalbodens gegen die Oberkante vom abflussfernen Ende zum abflussseitigen Ende hin monoton ab. In anderen Worten wird über die Länge des Kanals das Gefälle in Richtung Abfluss immer kleiner, d.h., es gibt keine Zwischenbereiche, in denen das Gefälle nochmals gegenüber den umliegenden Bereichen erhöht ist. Da üblicherweise mit abnehmendem Abstand zum Abfluss immer grössere Wassermengen transportiert werden, wird für einen effizienten Abtransport auch nur ein immer kleineres Gefälle benötigt.

Häufig wird eine Entwässerungsrinne aus einzelnen Rinnenkörpern aufgebaut. Von besonderem Interesse ist dann derjenige Rinnenkörper, der am Anfang des Kanals angeordnet ist. Dieser kann eine durchgängig konstante Neigung des Kanalbodens gegen die Oberkante aufweisen, wodurch das Anfangsgefälle festgelegt ist. Der zweite und alle nachfolgenden Rinnenkörper werden dann erfindungsgemäss eine geringere Neigung des Kanalbodens (ein geringeres Gefälle) aufweisen. Bevorzugt nimmt jedoch das Gefälle schon innerhalb des ersten Rinnenkörpers ab. In anderen Worten weist bevorzugt der abflussfernste Rinnenkörper am Anfang einen Bereich auf, in dem der Kanalboden stärker geneigt ist als in einem Bereich an seinem Ende.

Insbesondere im abflussseitigen Bereich kann die Entwässerungsrinne dagegen Rinnenkörper umfassen, in denen der Kanalboden in Längsrichtung überhaupt keine Neigung gegen die Oberkante aufweist, also parallel zur Oberkante verläuft. Solche Rinnenkörper sind seit langem bekannt. Sie können hier problemlos eingesetzt werden, weil die Strömung am Anfang des Kanals und damit der Wasserdruck erhöht sind. Insbesondere können erfindungsgemässe Rinnenkörper mit Rinnenkörpern des Standes der Technik, die sich schon im Produkteprogramm eines Herstellers befinden, kombiniert werden. Auf diese Weise kann eine sehr kostengünstige Rinne mit vergrösserter Länge aufgebaut werden.

Ein besonders einfacher Aufbau der Entwässerungsrinne wird dann ermöglicht, wenn der äussere Boden, mit dem die Rinne in ihrem Bett auf dem Untergrund aufliegt, und die Oberkante der Entwässerungsrinne parallel zueinander verlaufen. Eine solche Entwässerungsrinne kann in einen Graben eingelassen werden, der eine gleichbleibende Tiefe aufweist. Die Anforderungen an das Ausheben und an die allgemeinen Vorbereitungsarbeiten für einen solchen Graben sind weitaus geringer als für einen Graben, der eine Neigung aufweist, wie es für Entwässerungsrinnen des Standes der Technik erforderlich ist. Indem Oberkante und Unterkante parallel verlaufen, erhalten die Rinnenkörper zudem eine Form, die ein einfaches Stapeln und damit vereinfachte Lagerung und Transport ermöglicht. Die Erfindung umfasst demgemäss auch einen Rinnenkörper, dessen Kanalboden in Längsrichtung gegen den äusseren Boden geneigt ist und dessen äusserer Boden in Längsrichtung im wesentlichen parallel zur Oberkante verläuft.

In einer vorteilhaften Ausgestaltung weisen alle Rinnenkörper der Entwässerungsrinne oder innerhalb einer Gruppe von Rinnenkörpern im Wesentlichen die gleiche Bauhöhe, d.h., die gleiche Höhe zwischen äusserem Boden und Oberkante auf. Auf diese Weise können, wie schon oben beschrieben, die Rinnenkörper in einen Graben eingelassen werden, der über seine gesamte Länge eine gleich bleibende Tiefe aufweist.

In einer weiteren vorteilhaften Ausgestaltung werden zusätzlich Untersätze zur Verfügung gestellt. Diese ermöglichen es, am abflussfernen Ende der Rinne, wo der Kanal nur eine geringe Tiefe aufweist, Rinnenkörper mit geringerer Bauhöhe einzusetzen als am abflussseitigen Ende, an dem der Kanal eine grössere Tiefe aufweist. Die Rinnenkörper geringerer Bauhöhe werden mit den Untersätzen so kombiniert, dass sie die gleiche Gesamthöhe und damit die gleiche Einbautiefe aufweisen wie die Rinnenkörper grösserer Bauhöhe, die bevorzugt in Fliessrichtung abwärts eingesetzt werden. Auf diese Weise ist es wiederum möglich, einfach einen Graben von gleichbleibender Tiefe über seine gesamte Länge vorzubereiten, um die Rinne einzulassen. Zudem werden die Fertigungskosten dadurch verringert, dass ein Teil der verhältnismässig teuren Rinnenkörper, die in relativ kleinen Stückzahlen produziert werden und eine vergleichsweise hohe Präzision aufweisen müssen, nur mit geringer Bauhöhe gefertigt zu werden brauchen. Die zugehörigen Untersätze benötigen dagegen nur eine geringere Präzision und können sehr kostengünstig in grosser Zahl produziert werden.

Da die Wassermenge im Verlauf der Entwässerungsrinne zum Abfluss hin immer weiter zunehmen wird, ist es wünschenswert, dass der Kanal an seinem abflussseitigen Ende eine grössere Wassermenge transportieren kann als am Anfang. In einem an das abflussferne Ende angrenzenden Bereich weist der Kanal daher bevorzugt einen Querschnitt auf, der im wesentlichen nach unten hin V-förmig zuläuft. Dadurch wird das Wasser hier besonders gut kanalisiert. In einem an das abflussseitige Ende angrenzenden Bereich weist der Kanal dagegen bevorzugt einen Querschnitt auf, der im wesentlichen U-förmig ist. Der gegenüber der V-Form vergrösserte Querschnitt ermöglicht das Führen von grösseren Wassermengen. Zudem kann der Querschnitt in diesem Bereich gegebenenfalls an den Querschnitt von Rinnenkörpern des Standes der Technik angepasst sein, so dass im abflussnahen Bereich bekannte Rinnenkörper eingesetzt werden können.

### Kurze Beschreibung der Zeichnungen

Die Erfindung wird im Folgenden anhand der Zeichnungen näher erläutert. Es zeigen:
Fig. 1 eine stark schematische Darstellung einer Entwässerungsrinne von der Seite;
Fig. 2A einen ersten Rinnenkörper in schematischer Seitenansicht;
Fig. 2B den ersten Rinnenkörper schematisch im Querschnitt in der Ebene B―B;
Fig. 2C den ersten Rinnenkörper schematisch im Querschnitt in der Ebene C―C;
Fig. 3A, 3B und 3C einen zweiten Rinnenkörper schematisch in Seitenansicht und im Querschnitt in den Ebenen B'―B' und C'―C';
Fig. 4A , 4B und 4C einen dritten Rinnenkörper in den entsprechenden Ansichten der Fig. 3A bis 3C;
Fig. 5A , 5B und 5C einen vierten Rinnenkörper in den entsprechenden Ansichten der Fig. 3A bis 3C;
Fig. 6A , 6B und 6C einen fünften Rinnenkörper in den entsprechenden Ansichten der Fig. 3A bis 3C;
Fig. 7A , 7B und 7C einen sechsten Rinnenkörper in den entsprechenden Ansichten der Fig. 3A bis 3C;
Fig. 8A, 8B und 8C eine andere Ausführungsform des dritten Rinnenkörpers; und
Fig. 9A, 9B und 9C eine andere Ausführungsform des sechsten Rinnenkörpers.

### Ausführliche Beschreibung bevorzugter Ausführungsformen

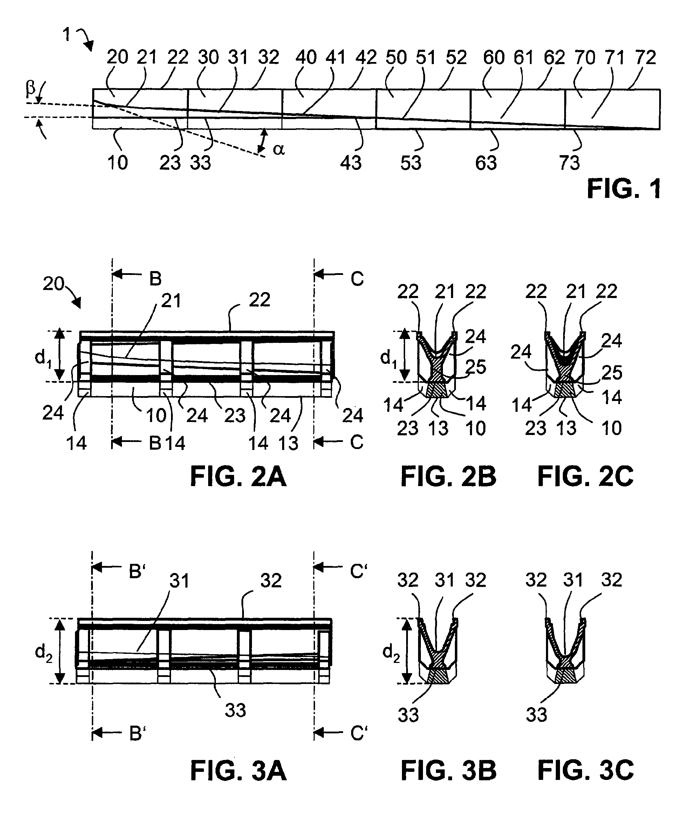

Die Fig. 1 illustriert den grundsätzlichen Aufbau einer Entwässerungsrinne gemäss der vorliegenden Erfindung. Die stark schematisch dargestellte Entwässerungsrinne 1 umfasst sechs Rinnenkörper 20, 30, 40, 50, 60 und 70, wobei unterhalb von dreien dieser Rinnenkörper zusätzlich Untersätze 10 angebracht sind. Jeder der Rinnenkörper ist nach unten durch einen äusseren Boden 23, 33, 43, 53, 63 bzw. 73 begrenzt und liegt mit diesem äusseren Boden auf einem Untergrund (Untersatz 10 oder unmittelbar das Bett des Grabens) auf. Dabei ist der äussere Boden in Längsrichtung jeweils horizontal ausgerichtet. Parallel zum äusseren Boden verläuft bei jedem der Rinnenkörper in Längsrichtung eine Oberkante 22, 32, 42, 52, 62 bzw. 72. Diese begrenzt den jeweiligen Rinnenkörper nach oben hin und verläuft bündig mit der nicht dargestellten horizontalen Oberfläche, in die die Entwässerungsrinne eingelassen ist.

Jeder der Rinnenkörper bildet einen Kanalabschnitt zur Aufnahme von Wasser. Jeder der Kanalabschnitte wiederum weist einen Kanalboden 21, 31, 41, 51, 61 bzw. 71 auf. Jeder Kanalboden ist gegenüber dem jeweiligen äusseren Boden und der dazu parallelen Oberkante in Längsrichtung geneigt. Auf diese Weise weist die Entwässerungsrinne ein Gefälle auf, wodurch Wasser in Richtung eines nicht dargestellten Abflusses am rechten Ende der Fig. 1 fliessen kann. Die Neigung der Kanalböden ist für den zweiten bis sechsten Rinnenkörper 30, 40, 50, 60 und 70 in etwa gleich und ist durch einen Winkel β bestimmt. Der Kanalboden des ersten Rinnenkörpers 20 weist dagegen eine Neigung gegenüber dem äusseren Boden auf, die sich über die Länge des Rinnenkörpers verändert. Am linken (abflussfernen) Ende des Rinnenkörpers 20, also nahe dem höchsten Punkt des Kanalbodens 21, ist diese Neigung grösser als am rechten Ende. Die Neigung im Bereich, der an das abflussferne Ende angrenzt, ist als Winkel α bezeichnet. Dieser Winkel α ist grösser als der Winkel β.

In den Fig. 2A, 2B und 2C ist der erste Rinnenkörper 20 zusammen mit seinem Untersatz 10 näher dargestellt. Dieser Rinnenkörper ist am weitesten vom Abfluss entfernt und bildet mit seinem linken Ende den Anfang der Enfinrässerungsrinne, d.h. den Punkt, an dem der Rinnenboden am höchsten liegt. Fig. 2A zeigt den Rinnenkörper 20 von der Seite, Fig. 2B und 2C im Querschnitt in den Ebenen B―B bzw. C―C. Der Rinnenkörper weist im Grundsatz einen Y-förmigen Querschnitt auf, der sich über die Länge des Rinnenkörpers kontinuierlich verändert. In regelmässigen Abständen sind zusätzlich Verstärkungsrippen 24 vorhanden, die die Querschnittsfläche an den entsprechenden Stellen erweitern. Die Unterseite des Rinnenkörpers definiert den äusseren Boden 23. Nach oben hin ist der Rinnenkörper durch die parallelen Oberkanten 22 begrenzt. Der Abstand zwischen dem äusseren Boden 23 und der Oberkante 22 definiert die Bauhöhe d₁ des Rinnenkörpers.

Der Rinnenkörper begrenzt einen im Wesentlichen V-förmigen Kanalabschnitt, der nach unten durch den Kanalboden 21 begrenzt ist. Der Verlauf des Kanalbodens 21 ist in der Fig. 2A durch eine dünn eingezeichnete Linie angedeutet. Vom linken (abflussfernen) zum rechten (abflussnahen) Ende verringert sich die Höhe des Kanalbodens 21 über dem äusseren Boden 23 kontinuierlich. Zwischen dem äusseren Boden 23 und dem Kanalboden 21 befindet sich ein relativ schmaler Steg 25, dessen Höhe entsprechend kontinuierlich abnimmt.

Der Untersatz 10 weist im Wesentlichen die Form eines langgestreckten Balkens auf, der den äusseren Boden des Rinnenkörpers 20 stützt. An den gleichen Positionen wie beim Rinnenkörper 20 weist auch der Untersatz 10 nach aussen weisende Verstärkungsrippen 14 auf. Diese stützen die Verstärkungsrippen 24 des Rinnenkörpers 20 und verhindern dadurch ein seitliches Kippen des Rinnenkörpers 20. Der Untersatz 10 liegt mit seiner Bodenfläche 13 auf dem ausgehobenen Bett eines nicht dargestellten Grabens auf.

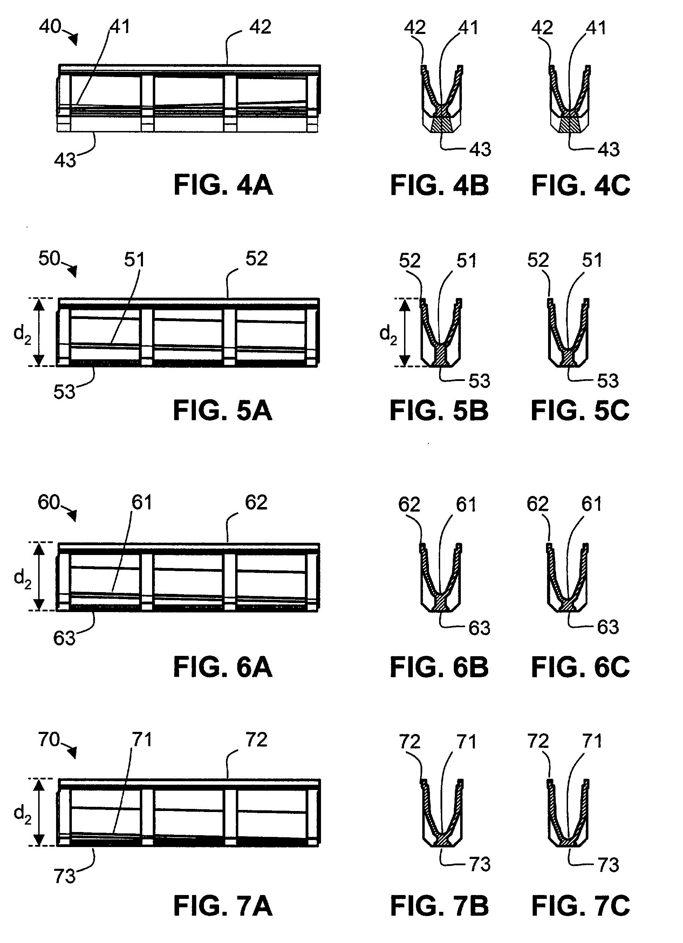

Die Fig. 3A, 3B und 3C zeigen den zweiten Rinnenkörper 30, die Fig. 4A, 4B und 4C den dritten Rinnenkörper 40 in ähnlichen Ansichten wie die Fig. 2A, 2B und 2C. Es wird dementsprechend auf die Ausführungen hierzu verwiesen. Die Querschnittsebenen für die Querschnittsdarstellungen der Fig. 3B und 3C sind die Ebenen B'―B' bzw. C'―C' der Fig. 3A. Die gleichen Querschnittsebenen wurden für die Darstellungen der Fig. 4B und 4C gewählt. Es ist klar erkennbar, wie der Kanalboden 31 bzw. 41 zunehmend an Höhe gegenüber dem äusseren Boden 33 bzw. 43 verliert. Gleichzeitig erweitert sich der Querschnitt des Kanals zunehmend. Die grundsätzliche Querschnittsform des Rinnenkörpers verändert sich dabei mehr und mehr von einer Y-Form zu einer V-Form.

Am rechten Ende des dritten Rinnenkörpers 40 ist der Kanalboden 41 nur noch um einen geringen Betrag vom äusseren Boden 43 entfernt. Der Kanal kann daher nicht mehr mit gleicher Neigung weitergeführt werden, ohne die Bauhöhe der Rinnenkörper rechts vom dritten Rinnenkörper 40 zu vergrössern.

Der vierte, fünfte und sechste Rinnenkörper 50, 60 und 70 sind in den Fig. 5A, 5B, 5C, 6A, 6B, 6C, 7A, 7B und 7C dargestellt. Erneut wird bezüglich der Darstellungen auf die Ausführungen zu den Fig. 2A bis 2C verwiesen. Die Querschnittsebenen für die Querschnitte entsprechen erneut den Ebenen B'―B' und C'―C' der Fig. 3A. Diese drei Rinnenkörper sind von grundsätzlich ähnlicher Bauform wie die ersten drei Rinnenkörper, weisen aber eine grössere Bauhöhe d₂ als die Bauhöhe d₁ der ersten drei Rinnenkörper auf. Dadurch können die Kanalböden 51, 61 bzw. 71 weiterhin eine Neigung relativ zu den äusseren Böden 53, 63 bzw. 73 und zu den Oberkanten 52, 62 bzw. 72 aufweisen. Wiederum verändert sich die Querschnittsform der Rinnenkörper von einem eher Y-ähnlichen Querschnitt am linken Ende des Rinnenkörpers 50 zu einem eher V-förmigen Querschnitt am rechten Ende des Rinnenkörpers 70, während die Höhe des Stegs zwischen Kanalboden und äusserem Boden abnimmt.

Die Bauhöhe d₂ der Rinnenkörper 50, 60 und 70 entspricht gerade der gemeinsamen Bauhöhe der Rinnenkörper 20, 30 und 40 mit ihren darunter angebrachten Untersätzen 10. Auf diese Weise kann das Bett, auf dem die Rinnenkörper bzw. Untersätze aufliegen, über die gesamte Länge der Entwässerungsrinne kontinuierlich horizontal verlaufen, ohne dass Stufen nötig wären.

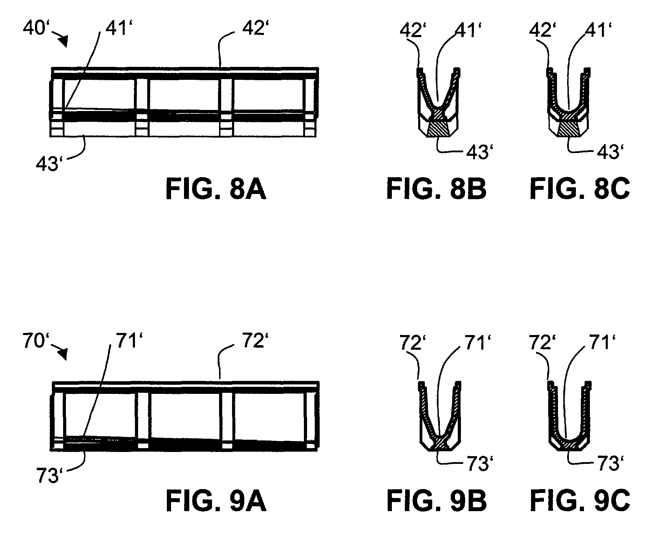

Die Fig. 8A, 8B und 8C zeigen eine alternative Ausführungsform des in den Fig. 4A bis 4C dargestellten dritten Rinnenkörpers (Rinnenkörper 40', Kanalboden 41', Oberkante 42', äusserer Boden 43'). In dieser Ausführungsform verändert sich der Querschnitt des vom Rinnenkörper begrenzten Kanalabschnitts von einer nach unten spitz zulaufenden V-artigen Form in eine nach unten rund zulaufende U-artige Form. Hierdurch erhöht sich der Querschnitt des Kanals zusätzlich, wodurch das Fassungsvermögen steigt. An einen solchen modifizierten Rinnenkörper schliessen sich bevorzugt Rinnenkörper ähnlich den in den Fig. 5A bis 7C dargestellten Rinnenkörpern an, deren Kanalabschnitt dann allerdings ebenfalls einen U-förmigen Querschnitt aufweist. Insbesondere können sich an den so modifizierten dritten Rinnenkörper 40' konventionelle Rinnenkörper mit U-förmigem Querschnitt, wie sie im Stand der Technik häufig anzutreffen sind, anschliessen.

In ähnlicher Weise zeigen die Fig. 9A, 9B und 9C eine alternative Ausführungsform des in den Fig. 7A bis 7C dargestellten sechsten Rinnenkörpers (Rinnenkörper 70', Kanalboden 71', Oberkante 72', äusserer Boden 73'). Dieser schliesst an die Rinnenkörper 20, 30, 40, 50 und 60 der Fig. 2A bis 6C an. Wiederum verändert sich der Querschnitt über die Länge des Rinnenkörpers von einer V- in eine U-Form. Auf diese Weise ist der Anschluss an weitere Rinnenkörper des Standes der Technik oder an einen konventionellen Abfluss möglich.

Statt dass sich der Querschnitt nur innerhalb eines einzigen Rinnenkörpers von der V- in die U-Form ändert, kann diese Änderung auch ganz allmählich über mehrere Rinnenkörper hinweg erfolgen.

Im vorliegenden Beispiel bilden sechs Rinnenkörper die Entwässerungsrinne. Falls es erwünscht ist, eine längere Rinne aufzubauen, kann die dargestellte Rinne aber ohne weiteres verlängert werden. Hierzu würden sich Rinnenkörper mit einer dritten Bauhöhe, die grösser als die Bauhöhe d₂ ist, rechts an den Rinnenkörper 70 anschliessen. Um auch eine solche Entwässerungsrinne in einen durchgehend horizontal verlaufenden Graben einbauen zu können, können weitere Untersätze 10 unter den Rinnenkörpern 50, 60 und 70 bzw. unter den schon vorhandenen Untersätzen 10 der Rinnenkörper 20, 30 und 40 angebracht werden. Alternativ kann die Rinne auch mit Rinnenkörpern der Bauhöhe d₂ fortgesetzt werden, die kein Gefälle aufweisen, d.h., in denen der Kanalboden parallel zur Oberkante und zum äusseren Boden verläuft, wie sie aus dem Stand der Technik bekannt sind.

Im vorliegenden Beispiel ist jeder der Rinnenkörper etwa 1000 Millimeter lang. Die Gesamtlänge der dargestellten Entwässerungsrinne beträgt damit 6 Meter. Die Bauhöhe d₁ beträgt 150 Millimeter, die Bauhöhe d₂ beträgt 195 Millimeter. Die Neigung im ersten Rinnenkörper ist in vier Abschnitten abgestuft. Auf den ersten 125 mm Länge liegt eine Anfangsneigung α von 9.1° vor, entsprechend einem Gefälle von 16%. Auf den nächsten 125 mm Länge beträgt die Neigung 4.6° (Gefälle 8%). Auf den folgenden 250 mm Länge beträgt die Neigung noch 2.3° (Gefälle 4%), während sie anschliessend auf den Wert β von 1.1° (Gefälle 2%) sinkt. Alle weiteren Rinnenkörper weisen ebenfalls die Neigung β von 1.1°, also ein Gefälle von 2% auf. Die Stufung ermöglicht eine einfachere Fertigung als eine kontinuierliche Veränderung des Neigungswinkels. Die Prozentangaben beziehen sich, wie üblich, auf das Verhältnis von Höhendifferenz zu horizontal gemessenem Abstand und entsprechen dem Tangens des Neigungswinkels.

Bei längeren oder kürzeren Rinnen und abhängig vom Einsatzgebiet können Rinnenkörper von anderen Abmessungen und mit anderen Neigungswinkeln des Kanalbodens zum Einsatz kommen. Generell werden Rinnen, die im Freien eingesetzt werden und zum Abtransport von grösseren Mengen Regenwasser eingesetzt werden, eher eine geringere Neigung bei grösserer Länge aufweisen als Rinnen, die in Gebäuden eingesetzt werden und zum Abtransport von dort auftretenden kleineren Flüssigkeitsmengen ausgelegt sind. So sind z.B. Neigungen von etwa 0,3° (0,6%) für Rinnen im Freien durchaus üblich. Auch die Anfangsneigung braucht dann entsprechend nicht so gross wie im vorliegenden Beispiel sein. So können die Vorteile der Erfindung auch schon dann erreicht werden, wenn der Neigungswinkel α am Anfang der Rinne beispielsweise um mindestens etwa 0,6° (1%), bevorzugt um mindestens etwa 1,1 (2%) gegenüber dem Neigungswinkel β im abflussnahen Bereich erhöht ist.

Im vorliegenden Ausführungsbeispiel ist die Neigung α am Anfang des ersten Rinnenkörpers gegenüber der Neigung β im zweiten Rinnenkörper um das Achtfache erhöht. Der Unterschied muss jedoch nicht notwendigerweise so gross sein, um die Vorteile der Erfindung zu erreichen. Bevorzugt beträgt die Neigung α im Anfangsbereich des ersten Rinnenkörpers bzw. im Anfangsbereich der Entwässerungsrinne mindestens etwa das 1,5-fache, besonders bevorzugt mindestens etwa das Doppelte der Neigung β im abflussnahen Bereich der Entwässerungsrinne.

Die Rinnenkörper sind bevorzugt aus sogenanntem Polymerbeton gefertigt. Als Polymerbeton (oder auch Polyesterbeton) wird eine Mischung von Sand, feinem Kies und anderem Füllstoffen bezeichnet, die mit einer Polymerkomponente gebunden ist. Polymerbeton weist für Entwässerungsrinnen günstige Eigenschaften auf. So ist Polymerbeton insbesondere wasserfest und -dicht und formstabil. Jedoch ist die Erfindung in keiner Weise auf Rinnenkörper aus Polymerbeton beschränkt, und die Rinnenkörper können auch aus anderen dem Fachmann geläufigen Materialien wie z.B. normalem Beton oder Kunststoff hergestellt werden.

Die Rinnenkörper sind in bekannter und dem Fachmann geläufiger Weise dafür ausgestaltet, miteinander verbunden zu werden und an ihrem oberen Ende ein Abdeckgitter aufzunehmen. Als Beispiele für derartige Ausgestaltungen wird ausdrücklich auf die Offenbarung der Dokumente EP-A 0 112 287, EP-A 0 151 684, EP-A 0 399 955, EP-A 0931 885 und CH-A 690 132 Bezug genommen.

## Patentansprüche

1. Entwässerungsrinne (1), welche einen nach oben hin zur Aufnahme von Flüssigkeit wenigstens teilweise geöffneten Kanal mit einem Kanalboden (21, 31, 41, 51, 61, 71), ein abflussseitiges und ein abflussfernes Ende sowie eine Oberkante (22, 32, 42, 52, 62, 72) aufweist, **dadurch gekennzeichnet, dass** der Kanalboden in einem an das abflussferne Ende angrenzenden Bereich in Längsrichtung stärker gegen die Oberkante geneigt ist als in jedem anderen Bereich der Entwässerungsrinne (1).

2. Entwässerungsrinne (1) gemäss Anspruch 1, **dadurch gekennzeichnet, dass** die Neigung des Kanalbodens (21, 31, 41, 51, 61, 71) gegen die Oberkante (22, 32, 42, 52, 62, 72) vom abflussfernen Ende zum abflussseitigen Ende hin monoton abnimmt.

3. Entwässerungsrinne (1) gemäss Anspruch 1 oder 2, **dadurch gekennzeichnet, dass** sie einen äusseren Boden (13, 53, 63, 73) zum Auflegen auf einen Untergrund aufweist, und dass der äussere Boden (13, 53, 63, 73) im wesentlichen parallel zur Oberkante der Entwässerungsrinne (1) verläuft.

4. Entwässerungsrinne (1) gemäss einem der vorhergehenden Ansprüche, **dadurch gekennzeichnet, dass** sie in einem an das abflussferne Ende angrenzenden Bereich einen Querschnitt aufweist, der im wesentlichen nach unten hin V-förmig zuläuft, und dass sie in einem an das abflussseitige Ende angrenzenden Bereich einen Querschnitt aufweist, der im wesentlichen U-förmig ist.

5. Entwässerungsrinne (1) gemäss einem der vorhergehenden Ansprüche, **dadurch gekennzeichnet, dass** sie eine Mehrzahl von miteinander verbundenen Rinnenkörpern (20; 30; 40; 50; 60; 70) umfasst, wobei jeder Rinnenkörper (20; 30; 40; 50; 60; 70) einen in Längsrichtung verlaufenden, nach oben offenen Kanalabschnitt mit einem Kanalboden (21; 31; 41; 51; 61; 71) und einer Oberkante (22; 32; 42; 52; 62; 72) aufweist.

6. Entwässerungsrinne (1) gemäss Anspruch 5, **dadurch gekennzeichnet, dass** sie an ihrem abflussfernen Ende einen Rinnenkörper (20) umfasst, dessen Kanalboden (21) in Längsrichtung wenigstens teilweise stärker gegen die Oberkante (22) geneigt ist als der Kanalboden (31; 41; 51; 61; 71) in jedem anderen Rinnenkörper (30; 40; 50; 60; 70).

7. Entwässerungsrinne (1) gemäss Anspruch 5 oder 6, **dadurch gekennzeichnet, dass** sie in einem an das abflussseitige Ende angrenzenden Bereich Rinnenkörper umfasst, in denen der Kanalboden in Längsrichtung parallel zur Oberkante verläuft.

8. Rinnenkörper (20) für eine Entwässerungsrinne (1) gemäss einem der Ansprüche 5 bis 7, wobei der Rinnenkörper (20) eine Oberkante (22), einen äusseren Boden (23) zur Auflage auf einem Untergrund und einen in Längsrichtung verlaufenden, nach oben offenen Kanalabschnitt mit einem Kanalboden (21) aufweist, **dadurch gekennzeichnet, dass** der Kanalboden (21) in einem Abschnitt, der an dasjenige Ende des Rinnenkörpers (20) angrenzt, an dem der Kanalboden (21) am höchsten liegt, in Längsrichtung stärker gegen die Oberkante (22) geneigt ist als in einem an das entgegengesetzte Ende des Rinnenkörpers (20) angrenzenden Abschnitt.

9. Rinnenkörper (20; 30; 40; 50; 60; 70) für eine Entwässerungsrinne (1), insbesondere für eine Entwässerungsrinne (1) gemäss einem der Ansprüche 5 bis 7, wobei der Rinnenkörper (20; 30; 40; 50; 60; 70) eine Oberkante (22; 32; 42; 52; 62; 72), einen äusseren Boden (23; 33; 43; 53; 63; 73) zur Auflage auf einem Untergrund und einen in Längsrichtung verlaufenden, nach oben offenen Kanalabschnitt mit einem Kanalboden (21; 31; 41; 51; 61; 71) aufweist, **dadurch gekennzeichnet, dass** der Kanalboden (21; 31; 41; 51; 61; 71) in Längsrichtung gegen den äusseren Boden geneigt ist und dass der äussere Boden (23; 33; 43; 53; 63; 73) in Längsrichtung im wesentlichen parallel zur Oberkante (22; 32; 42; 52; 62; 72) verläuft.

10. Kombination von Rinnenkörpern gemäss Anspruch 8 oder 9, **dadurch gekennzeichnet, dass** die Oberkante jedes Rinnenkörpers (20; 30; 40; 50; 60; 70) in Längsrichtung im wesentlichen parallel zum äusseren Boden verläuft, und dass alle Rinnenkörper (20; 30; 40; 50; 60; 70) im wesentlichen die gleiche Bauhöhe (d₁; d₂) zwischen äusserem Boden (23; 33; 43; 53; 63; 73) und Oberkante (22; 32; 42; 52; 62; 72) aufweisen.

11. Kombination von Rinnenkörpern gemäss Anspruch 8 oder 9, **dadurch gekennzeichnet, dass** die Oberkante jedes Rinnenkörpers (20; 30; 40; 50; 60; 70) in Längsrichtung im wesentlichen parallel zum äusseren Boden verläuft, und dass die Kombination wenigstens einen Untersatz (10) umfasst, der dazu ausgebildet ist, unter wenigstens einem der Rinnenkörper (20; 30; 40) angebracht zu werden, um dessen Bauhöhe (d₁) zu vergrössern, und dass der Untersatz (10) eine Höhe aufweist, die so gewählt ist, dass die Bauhöhe (d₂) wenigstens eines der Rinnenkörper (50; 60; 70) im wesentlichen gleich der Bauhöhe eines anderen der Rinnenkörper (20; 30; 40) zusammen mit dem darunter angebrachten Untersatz (10) ist.
